# EUROPEAN PATENT APPLICATION

(11) **EP 1 056 286 A2**
(43) Date of publication of application: **29.11.2000**
(21) Application number: 00302813.1
(22) Date of filing: 03.04.2000
(51) Int. Cl.: H04N 5/783

(54) **Method and apparatus for recording digital information signal**

(30) Priority: 28.05.1999 JP 14942299
(71) Applicant: Victor Company of Japan, Ltd., Yokohama 221-0022 (JP)
(72) Inventor: Ichinoi, Yutaka, Yokohama-shi, Kanagawa-ken (JP); Ohishi, Takeo, Yokohama-shi, Kanagawa-ken (JP)
(74) Representative: Dempster, Benjamin John Naftel

(57) **Abstract**

First data for playback at a normal speed are processed into second data for playback at a speed equal to N times the normal speed, where N denotes a predetermined integer. A portion of the second data is selected to form third data for playback at a speed equal to M•N times the normal speed, where M denotes a predetermined integer. The first data, the second data, and the third data are recorded on separate areas of a recording medium respectively.

## Description

This invention relates to an apparatus for recording normal-playback digital information signal and also trick-playback (special-playback) digital information signal on a recording medium. Also, this invention relates to a method of recording normal-playback digital information signal and also trick-playback digital information signal on a recording medium.

In a magnetic-tape signal recording and reproducing apparatus (a VTR), during trick playback or special playback, a magnetic tape is scanned by a magnetic head or heads at a speed different from a normal-playback speed.

In a typical helical-scan VTR, the trajectories along which a magnetic tape is scanned by magnetic heads during trick playback (special playback) do not coincide with those occurring during normal playback. A known VTR records both a digital information signal for normal playback and a digital information signal for trick playback on a common magnetic tape. In addition, it is known to locate pieces of a digital information signal for trick playback at predetermined positions in a magnetic tape which will be on tape-scan trajectories occurring during trick playback.

Japanese published unexamined patent application 6-261278 discloses an apparatus for recording and reproducing a digital information signal on and from a magnetic tape. In the apparatus of Japanese application 6-261278, pieces of digital data for high-speed playback are located at portions of the magnetic tape which a magnetic head will scan in common during 3-fold speed playback and 9-fold speed playback.

Japanese published unexamined patent application 8-275102 discloses an apparatus for recording a digital information signal on a tape-like recording medium. Operation of the apparatus of Japanese application 8-275102 can change between first and second modes which correspond to first and second signal recording formats respectively. During operation in the first-format mode, digital data for normal playback are recorded on given regions in the recording medium. During operation in the second-format mode, digital data for normal playback are recorded in regions of the recording medium which are common to the first-format mode and the second-format mode. During operation in either the first-format mode or the second-format mode, digital data for trick playback are recorded on specified areas within regions in the recording medium which are common to the first-format mode and the second-format mode. Regarding the apparatus of Japanese application 8-275102, the trick playback includes 4-fold-speed forward playback, 12-fold-speed forward playback, 24-fold-speed forward playback, 4-fold-speed reverse playback, 12-fold-speed reverse playback, and 24-fold-speed reverse playback.

Japanese published unexamined patent application 10-262214 shows a data record pattern on a magnetic tape. In Japanese application 10-262214, the data record pattern is composed of separate areas of the magnetic tape which include areas assigned to data for 4-fold-speed playback, areas assigned to data for 12-fold-speed playback, and areas assigned to data for 24-fold-speed playback.

Japanese published unexamined patent application 8-275106 discloses a picture data recording apparatus in which a data rate converter changes a data rate of an input MPEG bit stream into a data rate for signal recording by a VTR. The data rate converter outputs the resultant bit stream as normal-playback data. In the apparatus of Japanese application 8-275106, a simplified decoder extracts portions from the input MPEG bit stream which represent I pictures (intra coded pictures). The simplified decoder outputs the extracted stream portions. A special-playback data generator extracts a DC component and low-frequency components from the output signal of the simplified decoder for every I picture. The special-playback data generator produces special-playback data on the basis of the extracted signal components. The special-playback data include data for 4-fold-speed forward playback (or 2-fold-speed reverse playback), data for 8-fold-speed forward playback (or 6-fold-speed reverse playback), and data for 24-fold-speed forward playback (or 22-fold-speed reverse playback). The 4-fold-speed playback data, the 8-fold-speed playback data, and the 24-fold-speed playback data are stored into buffers respectively. A recording selector receives the normal-playback data from the data rate converter. The recording selector accesses the buffers. The recording selector sequentially and cyclically combines the normal-playback data, the 4-fold-speed playback data, the 8-fold-speed playback data, and the 24-fold-speed playback data into composite data in the order determined by a signal recording format. The composite data are recorded on a magnetic tape by the VTR.

The apparatus of Japanese application 8-275106 necessitates a complicated MPEG decoder in a reproducing side. In the apparatus of Japanese application 8-275106, the qualities of pictures represented by the special-playback data tend to be considerably low.

It is a first object of this invention to provide an improved apparatus for recording a digital information signal.

It is a second object of this invention to provide an improved method of recording a digital information signal.

A first aspect of this invention provides an apparatus for recording a digital information signal. The apparatus comprises first means for processing first data for playback at a normal speed into second data for playback at a speed equal to N times the normal speed, where N denotes a predetermined integer; second means for selecting a portion of the second data to form third data for playback at a speed equal to M•N times the normal speed, where M denotes a predetermined integer; and third means for recording the first data, the second data, and the third data on separate areas of a recording medium respectively.

A second aspect of this invention is based on the first aspect thereof, and provides an apparatus wherein the second means comprises means for decimating the second data into the third data.

A third aspect of this invention is based on the first aspect thereof, and provides an apparatus wherein the second means comprises a memory which stores the second data and outputs the portion of the second data as the third data.

A fourth aspect of this invention provides a method of recording a digital information signal. The method comprises the steps of processing first data for playback at a normal speed into second data for playback at a speed equal to N times the normal speed, where N denotes a predetermined integer; selecting a portion of the second data to form third data for playback at a speed equal to M•N times the normal speed, where M denotes a predetermined integer; and recording the first data, the second data, and the third data on separate areas of a recording medium respectively.

A fifth aspect of this invention is based on the fourth aspect thereof, and provides a method wherein the selecting step comprises decimating the second data into the third data.

A sixth aspect of this invention is based on the fourth aspect thereof, and provides a method wherein the selecting step comprises storing the second data, and outputting the portion of the second data as the third data.

Fig. 1 is a block diagram of a prior-art recording apparatus. Fig. 2 is a block diagram of a digital information signal recording apparatus according to a first embodiment of this invention.

Fig. 3 is a time-domain diagram of data read out from memories in Fig. 2.

Fig. 4 is a block diagram of a digital information signal recording apparatus according to a second embodiment of this invention.

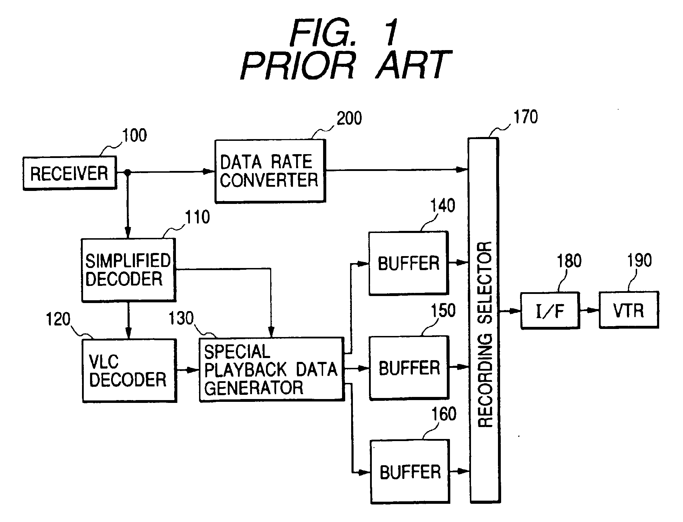

A prior-art recording apparatus will be explained below for a better understanding of this invention. Fig. 1 shows a prior-art recording apparatus disclosed in Japanese published unexamined patent application 8-275106. The prior-art recording apparatus of Fig. 1 includes a receiver 100 into which transmitted data are inputted via an antenna or a cable (not shown). The receiver 100 extracts a desired MPEG bit stream from the transmitted data. The receiver 100 outputs the extracted MPEG bit stream to a simplified decoder 110 and a data rate converter 200.

The data rate converter 200 changes a data rate of the MPEG bit stream into a data rate for signal recording by a VTR 190. The data rate converter 200 outputs the resultant MPEG bit stream to a recording selector 170 as data for normal playback. The data rate converter 200 synchronizes the output MPEG bit stream with special-playback data fed to the recording selector 170 from buffers 140, 150, and 160.

The simplified decoder 110 extracts portions from the input MPEG bit stream which represent I pictures (intra coded pictures). The simple decoder 110 outputs the extracted stream portions, that is, the I-picture data, to a VLC (variable length code) decoder 120. The VLC decoder 120 subjects the I-picture data to a decoding process for a variable-length code. The VLC decoder 120 outputs the resultant data to a special-playback data generator 130.

The simplified decoder 110 extracts MPEG-reproduction-related header information from the input MPEG bit stream. The simplified decoder 110 outputs the extracted header information to the special-playback data generator 130.

The data outputted from the VLC decoder 120 to the special-playback data generator 130 have a sequence of blocks each being composed of a predetermined number of data pieces representing respective transform coefficients (DCT coefficients) including one DC coefficient and plural AC coefficients.

For every block of the output data from the VLC decoder 120, the special-playback data generator 130 selects a DC-coefficient data piece and three low-frequency AC-coefficient data pieces from among the predetermined number of data pieces in response to the header information. The special-playback data generator 130 stores the selected DC-coefficient data piece and three AC-coefficient data pieces into the buffer 140 as pieces of data for special playback, that is, 4-fold-speed forward playback (or 2-fold-speed reverse playback).

For every block of the output data from the VLC decoder 120, the special-playback data generator 130 selects a DC-coefficient data piece and two low-frequency AC-coefficient data pieces from among the predetermined number of data pieces in response to the header information. The special-playback data generator 130 stores the selected DC-coefficient data piece and two AC-coefficient data pieces into the buffer 150 as pieces of data for special playback, that is, 8-fold-speed forward playback (or 6-fold-speed reverse playback).

For every block of the output data from the VLC decoder 120, the special-playback data generator 130 selects a DC-coefficient data piece from among the predetermined number of data pieces in response to the header information. The special-playback data generator 130 stores the selected DC-coefficient data piece into the buffer 160 as a piece of data for special playback, that is, 24-fold-speed forward playback (or 22-fold-speed reverse playback).

The buffer 140 outputs special-playback data pieces to the recording selector 170 in the order corresponding to the format of a signal recorded on a magnetic tape by the VTR 190. Similarly, the buffer 150 outputs special-playback data pieces to the recording selector 170 in the order corresponding to the signal recording format. In addition, the buffer 160 outputs special-playback data pieces to the recording selector 170 in the order corresponding to the signal recording format.

The recording selector 170 multiplexes the output data from the data rate converter 200, the output data from the buffer 140, the output data from the buffer 150, the output data from the buffer 160, EOF flags, TP flags, TU flags, and TN flags on such a time sharing basis that every pair of two transport packets will be placed in five sync blocks. The recording selector 170 outputs the multiplexing-resultant data to an interface (I/F) circuit 180.

The interface circuit 180 adds an error correction code signal, a sync signal, and ID signals to the output data from the recording selector 170. The interface circuit 180 outputs the resultant data to the VTR 190. In the VTR 190, a rotary-drum head records the output data from the interface circuit 180 on a magnetic tape while forming slant tracks thereon. For example, 10 slant tracks are formed per 1/30 second.

The special-playback data generator 130 produces the 4-fold-speed playback data, the 8-fold-speed playback data, and the 24-fold-speed playback data in respective ways which are substantially separate from each other. Thus, an MPEG decoder in a reproducing side is required to process reproduced 4-fold-speed playback data, reproduced 8-fold-speed playback data, and reproduced 24-fold-speed playback data in considerably different ways respectively. Accordingly, the MPEG decoder tends to be complicated in circuit structure.

In the prior-art recording apparatus of Fig. 1, the amount of special-playback information representing AC coefficients and transmitted per unit time is relatively small. In addition, the amount of special-playback information representing AC coefficients decreases as the playback speed increases. The 24-fold-speed playback data represent only DC coefficients. Accordingly, the qualities of pictures represented by the special-playback data tend to be considerably low.

Preferred embodiments of the invention will now be described by way of example.

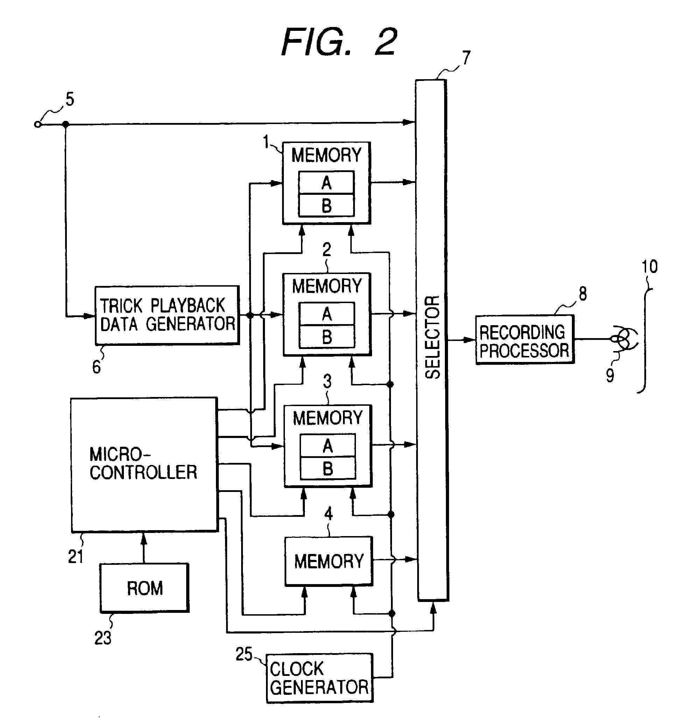

Fig. 2 shows a digital information signal recording apparatus according to a first embodiment of this invention. The recording apparatus of Fig. 2 includes memories 1, 2, 3, and 4, an input terminal 5, a trick-playback (special-playback) data generator 6, a selector 7, a recording processor 8, and a magnetic head 9. The memories 1, 2, and 3 are connected between the trick-playback data generator 6 and the selector 7. The memory 4 is connected to the selector 7. The input terminal 5 is connected to the trick-playback data generator 6 and the selector 7. The recording processor 8 is connected to the selector 7. The magnetic head 9 is connected to the recording processor 8.

MPEG data for normal playback (normal-speed playback) are fed to the trick-playback data generator 6 and the selector 7 via the input terminal 5. The trick-playback data generator 6 produces trick-playback (special-playback) data from the normal-playback data in one of conventional ways. The trick-playback data are designed for 4-fold-speed forward playback, that is, forward playback at a speed equal to 4 times the normal-playback speed. The trick-playback data generator 6 outputs the 4-fold-speed playback data to the memories 1, 2, and 3. The 4-fold-speed playback data are temporarily stored in the memories 1, 2, and 3.

The trick-playback data or the 4-fold-speed playback data produced by the trick-playback data generator 6 have a sequence of data pieces including data pieces representing I pictures (intra coded pictures) respectively. The I-picture data pieces will be denoted by the characters I0, I1, I2, I3, ··· in a later description.

Each of the memories 1, 2, and 3 has two areas, that is, an area "A" and an area "B". Regarding each of the memories 1, 2, and 3, the area "A" is alternately subjected to a data writing process and a data reading process, and also the area "B" is alternately subjected to a data writing process and a data reading process. Specifically, the area "A" is subjected to the data writing process while the area "B" is subjected to the data reading process. The area "A" is subjected to the data reading process while the area "B" is subjected to the data writing process. Accordingly, writing data into each of the memories 1, 2, and 3, and reading data therefrom can be simultaneously implemented.

The memory 1 is assigned to 4-fold-speed forward playback, that is, forward playback at a speed equal to 4 times the normal-playback speed. The memory 2 is assigned to 12-fold-speed forward playback, that is, forward playback at a speed equal to 12 times the normal-playback speed. The memory 3 is assigned to 24-fold-speed forward playback, that is, forward playback at a speed equal to 24 times the normal-playback speed.

Each of the memories 1, 2, and 3 may include a section for controlling data write into and data read from the areas "A" and "B" in response to a timing signal generated by a suitable device. In this case, the timing signal determines moments t0, t1, t2, ··· mentioned later, and the control section is designed to provide processes mentioned later.

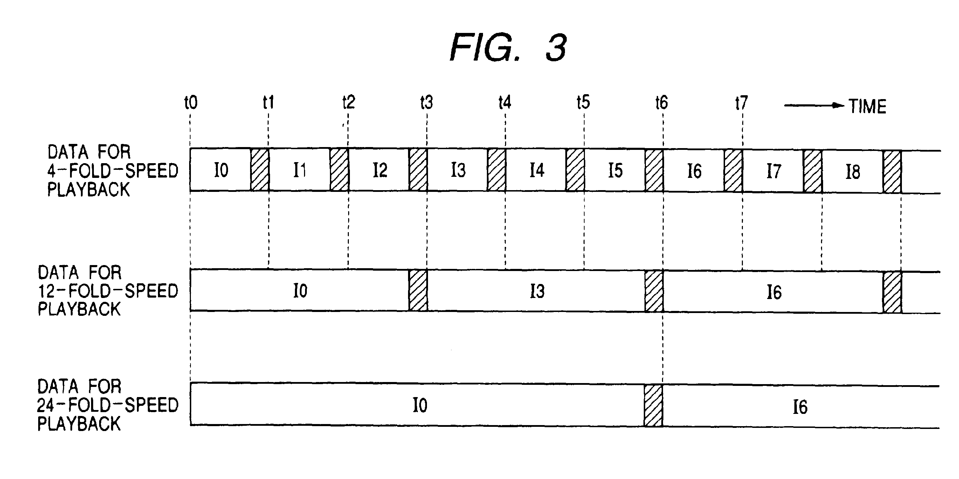

With reference to Fig. 3, before a moment t0, a trick-playback data piece I0 outputted from the trick-playback data generator 6 is written into the areas "A" of the memories 1, 2, and 3.

During the time interval between the moment t0 and a subsequent moment t1, a trick-playback data piece I1 outputted from the trick-playback data generator 6 is written into the area "B" of the memory 1 while continuing to be not written into the memories 2 and 3. During the time interval between the moments t0 and tl, the trick-playback data piece I0 is read out from the area "A" of the memory 1. In addition, a portion of the trick-playback data piece I0 is read out from the area "A" of the memory 2, and a portion of the trick-playback data piece I0 is read out from the area "A" of the memory 3.

During the time interval between the moment t1 and a next moment t2, a trick-playback data piece I2 outputted from the trick-playback data generator 6 is written into the area "A" of the memory 1 while continuing to be not written into the memories 2 and 3. During the time interval between the moments t1 and t2, the trick-playback data piece I1 is read out from the area "B" of the memory 1. In addition, a portion of the trick-playback data piece I0 is read out from the area "A" of the memory 2, and a portion of the trick-playback data piece I0 is read out from the area "A" of the memory 3.

During the time interval between the moment t2 and a subsequent moment t3, a trick-playback data piece I3 outputted from the trick-playback data generator 6 is written into the areas "B" of the memories 1 and 2 while continuing to be not written into the memory 3. During the time interval between the moments t2 and t3, the trick-playback data piece I2 is read out from the area "A" of the memory 1. In addition, a portion of the trick-playback data piece I0 is read out from the area "A" of the memory 2, and a portion of the trick-playback data piece I0 is read out from the area "A" of the memory 3.

During the time interval between the moment t3 and a next moment t4, a trick-playback data piece I4 outputted from the trick-playback data generator 6 is written into the area "A" of the memory 1 while continuing to be not written into the memories 2 and 3. During the time interval between the moments t3 and t4, the trick-playback data piece 13 is read out from the area "B" of the memory 1. In addition, a portion of the trick-playback data piece I3 is read out from the area "B" of the memory 2, and a portion of the trick-playback data piece I0 is read out from the area "A" of the memory 3.

During the time interval between the moment t4 and a subsequent moment t5, a trick-playback data piece I5 outputted from the trick-playback data generator 6 is written into the area "B" of the memory 1 while continuing to be not written into the memories 2 and 3. During the time interval between the moments t4 and t5, the trick-playback data piece I4 is read out from the area "A" of the memory 1. In addition, a portion of the trick-playback data piece I3 is read out from the area "B" of the memory 2, and a portion of the trick-playback data piece I0 is read out from the area "A" of the memory 3.

During the time interval between the moment t5 and a next moment t6, a trick-playback data piece I6 outputted from the trick-playback data generator 6 is written into the areas "A" of the memories 1 and 2, and the area "B" of the memory 3. During the time interval between the moments t5 and t6, the trick-playback data piece I5 is read out from the area "B" of the memory 1. In addition, a portion of the trick-playback data piece I3 is read out from the area "B" of the memory 2, and a portion of the trick-playback data piece I0 is read out from the area "A" of the memory 3.

The above-mentioned sequence of data writing steps and data reading steps regarding the memories 1, 2, and 3 is periodically iterated. Data pieces read out from the memory 1 compose data for 4-fold-speed forward playback. Data pieces read out from the memory 2 compose data for 12-fold-speed forward playback. Data pieces read out from the memory 3 compose data for 24-fold-speed forward playback. As understood from the above description, the 12-fold-speed playback data and the 24-fold-speed playback data are generated from the 4-fold-speed playback data by data thinning processes or data decimating processes along a time base.

The memory 4 stores a given data piece representing a P picture (a predictive coded picture) designed on the assumption that motion is absent. The P-picture data piece will be inserted between I-picture data pieces.

The selector 7 receives the normal-playback data transmitted via the input terminal 5. The selector 7 receives the 4-fold-speed playback data from the memory 1. The selector 7 receives the 12-fold-speed playback data from the memory 2. The selector 7 receives the 24-fold-speed playback data from the memory 3. The selector 7 reads out the P-picture data from the memory 4. The selector 7 generates various flags. The selector 7 multiplexes the normal-playback data, the 4-fold-speed playback data, the 12-fold-speed playback data, the 24-fold-speed playback data, the flags, and the P-picture data into a sequence of packets on a time sharing basis through sequential and cyclic data selection in the order corresponding to the format of a signal recorded on a magnetic tape 10. The selector 7 outputs the sequence of packets to the recording processor 8 as a multiplexing-resultant signal. The selector 7 may be a conventional one.

The recording processor 8 adds an error correction code signal, a sync signal, and ID signals to the output signal from the selector 7. The recording processor 8 adjusts the level of the resultant signal. The recording processor 8 outputs the level-adjusted signal to the magnetic head 9. The magnetic head 9 records the output signal of the recording processor 8 on a magnetic tape 10 while forming tracks thereon. According to the format of a signal recorded on the magnetic tape 10, the normal-playback data, the 4-fold-speed playback data, the 12-fold-speed playback data, the 24-fold-speed playback data are located in separate areas of the magnetic tape 10, respectively.

As understood from the previous description, the normal-playback data, the 4-fold-speed playback data, the 12-fold-speed playback data, and the 24-fold-speed playback data are recorded on a time sharing basis. A same portion of each of the 4-fold-speed playback data, the 12-fold-speed playback data, and the 24-fold-speed playback data may be repetitively recorded several times over a given range of a recording track on the magnetic tape 10. In this case, the trick-playback data can be surely reproduced during playback.

In Fig. 3, the hatched regions denote time intervals where P-picture data pieces and other information pieces are placed by the selector 7. As previously mentioned, the P-picture data pieces are designed on the assumption that motion is absent. The total amount of information in each of the hatched regions is relatively small.

In Fig. 3, the scale of the abscissa corresponds to time during the recording of a signal on the magnetic tape 10. Regarding the recording of the trick-playback data, a 12-fold-speed playback data piece I0 is recorded while 4-fold-speed playback data pieces I0, I1, and I2 are recorded. Subsequently, a 12-fold-speed playback data piece I3 is recorded while 4-fold-speed playback data pieces I3, I4, and I5 are recorded. A 24-fold-speed playback data piece I0 is recorded while 4-fold-speed playback data pieces I0, I1, I2, I3, I4, and I5 are recorded. Subsequently, a 24-fold-speed playback data piece I6 is recorded while 4-fold-speed playback data pieces I6, I7, I8, I9, I10, and I11 are recorded.

During 4-fold-speed forward playback, 4-fold-speed playback data pieces I0, I1, I2, I3, ··· are sequentially reproduced at a predetermined period. During 12-fold-speed forward playback, 12-fold-speed playback data pieces I0, I3, ··· are sequentially reproduced at the same predetermined period. It should be noted that the 12-fold-speed forward playback is equal in speed to three times the 4-fold-speed forward playback. Similarly, during 24-fold-speed forward playback, 24-fold-speed playback data pieces I0, I6, ··· are sequentially reproduced at the same predetermined period. The period of the reproduction of I-picture data pieces is a refreshment rate. As understood from the previous description, the refreshment rate is independent of the speed of trick playback.

The recording apparatus of Fig. 2 includes a micro-controller or a microcomputer 21, a ROM 23, and a clock signal generator 25. The micro-controller 21 is connected to the memories 1, 2, 3, and 4, and the selector 7. The ROM 23 is connected to the micro-controller 21. The clock signal generator 25 is connected to the memories 1, 2, 3, and 4.

The ROM 23 stores first timing information representative of desired timings of writing and reading data pieces into and from the areas "A" and "B" of the memories 1, 2, and 3. In addition, the ROM 23 stores second timing information representative of a desired timing of reading the P-picture data piece from the memory 4. Furthermore, the ROM 23 stores third timing information representative of desired timings of data selection by the selector 7. The ROM 23 outputs the first timing information, the second timing information, and the third timing information to the micro-controller 21.

The micro-controller 21 is programmed to control the memories 1, 2, 3, and 4, and the selector 7 in response to the first timing information, the second timing information, and the third timing information. Specifically, the micro-controller 21 controls actual timings of writing and reading data pieces into and from the areas "A" and "B" of the memories 1, 2, and 3 in accordance with the desired timings represented by the first timing information. The micro-controller 21 controls an actual timing of reading the P-picture data piece from the memory 4 in accordance with the desired timing represented by the second timing information. The micro-controller 21 controls actual timings of data selection by the selector 7 in accordance with the desired timings represented by the third timing information.

The clock signal generator 25 produces a clock pulse signal having a predetermined frequency. The clock signal generator 25 outputs the clock pulse signal to the memories 1, 2, 3, and 4. The clock pulse signal provides time units in the timing control related to the memories 1, 2, 3, and 4.

### Second Embodiment

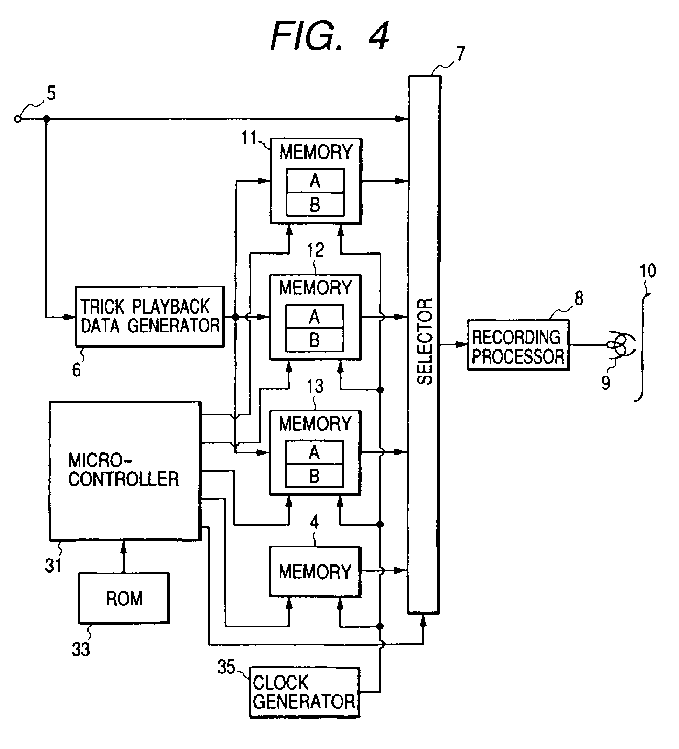

Fig. 4 shows a digital information signal recording apparatus according to a second embodiment of this invention. The recording apparatus of Fig. 4 is similar to the recording apparatus of Fig. 2 except for design changes mentioned later. The recording apparatus of Fig. 4 includes memories 11, 12, and 13 instead of the memories 1, 2, and 3 (see Fig. 2). Each of the memories 11, 12, and 13 has two areas, that is, an area "A" and an area "B".

Before a moment t0, a trick-playback data piece I0 outputted from a trick-playback data generator 6 is written into the area "A" of the memory 11.

During the time interval between the moment t0 and a subsequent moment t1, a trick-playback data piece I1 outputted from the trick-playback data generator 6 is written into the area "A" of the memory 12. In addition, the trick-playback data piece I0 is read out from the area "A" of the memory 11 as a 4-fold-speed playback data piece, and portions of the trick-playback data piece I0 are read out therefrom at suitable timings as a 12-fold-speed playback data piece and a 24-fold-speed playback data piece respectively. The 4-fold-speed playback data piece, the 12-fold-speed playback data piece, and the 24-fold-speed playback data piece are fed to a selector 7.

During the time interval between the moment t1 and a next moment t2, a trick-playback data piece I2 outputted from the trick-playback data generator 6 is written into the area "B" of the memory 12. In addition, the trick-playback data piece I1 is read out from the area "A" of the memory 12 as a 4-fold-speed playback data piece, and portions of the trick-playback data piece I0 are read out form the area "A" of the memory 11 at suitable timings as a 12-fold-speed playback data piece and a 24-fold-speed playback data piece respectively. The 4-fold-speed playback data piece, the 12-fold-speed playback data piece, and the 24-fold-speed playback data piece are fed to the selector 7.

During the time interval between the moment t2 and a subsequent moment t3, a trick-playback data piece I3 outputted from the trick-playback data generator 6 is written into the area "A" of the memory 13. In addition, the trick-playback data piece I2 is read out from the area "B" of the memory 12 as a 4-fold-speed playback data piece, and portions of the trick-playback data piece I0 are read out form the area "A" of the memory 11 at suitable timings as a 12-fold-speed playback data piece and a 24-fold-speed playback data piece respectively. The 4-fold-speed playback data piece, the 12-fold-speed playback data piece, and the 24-fold-speed playback data piece are fed to the selector 7.

During the time interval between the moment t3 and a next moment t4, a trick-playback data piece I4 outputted from the trick-playback data generator 6 is written into the area "B" of the memory 12. In addition, the trick-playback data piece I3 is read out from the area "A" of the memory 13 as a 4-fold-speed playback data piece. Furthermore, a portion of the trick-playback data piece I0 is read out form the area "A" of the memory 11 at a suitable timing as a 24-fold-speed playback data piece, and a portion of the trick-playback data piece I3 is read out form the area "A" of the memory 13 at a suitable timing as a 12-fold-speed playback data piece. The 4-fold-speed playback data piece, the 12-fold-speed playback data piece, and the 24-fold-speed playback data piece are fed to the selector 7.

During the time interval between the moment t4 and a subsequent moment t5, a trick-playback data piece I5 outputted from the trick-playback data generator 6 is written into the area "A" of the memory 12. In addition, the trick-playback data piece I4 is read out from the area "B" of the memory 12 as a 4-fold-speed playback data piece. Furthermore, a portion of the trick-playback data piece I0 is read out form the area "A" of the memory 11 at a suitable timing as a 24-fold-speed playback data piece, and a portion of the trick-playback data piece I3 is read out form the area "A" of the memory 13 at a suitable timing as a 12-fold-speed playback data piece. The 4-fold-speed playback data piece, the 12-fold-speed playback data piece, and the 24-fold-speed playback data piece are fed to the selector 7.

During the time interval between the moment t5 and a next moment t6, a trick-playback data piece I6 outputted from the trick-playback data generator 6 is written into the area "B" of the memory 11. In addition, the trick-playback data piece I5 is read out from the area "A" of the memory 12 as a 4-fold-speed playback data piece. Furthermore, a portion of the trick-playback data piece I0 is read out form the area "A" of the memory 11 at a suitable timing as a 24-fold-speed playback data piece, and a portion of the trick-playback data piece I3 is read out form the area "A" of the memory 13 at a suitable timing as a 12-fold-speed playback data piece. The 4-fold-speed playback data piece, the 12-fold-speed playback data piece, and the 24-fold-speed playback data piece are fed to the selector 7.

During the time interval between the moment t6 and a subsequent moment t7, a trick-playback data piece I7 outputted from the trick-playback data generator 6 is written into the area "B" of the memory 12. In addition, the trick-playback data piece I6 is read out from the area "B" of the memory 11 as a 4-fold-speed playback data piece, and portions of the trick-playback data piece I6 are read out therefrom at suitable timings as a 12-fold-speed playback data piece and a 24-fold-speed playback data piece respectively. The 4-fold-speed playback data piece, the 12-fold-speed playback data piece, and the 24-fold-speed playback data piece are fed to the selector 7.

The above-mentioned sequence of data writing steps and data reading steps regarding the memories 11, 12, and 13 is periodically iterated.

The recording apparatus of Fig. 4 includes a micro-controller (a microcomputer) 31, a ROM 33, and a clock signal generator 35 instead of the micro-controller 21, the ROM 23, and the clock signal generator 25 (see Fig. 2). The micro-controller 31 is connected to the memories 11, 12, 13, and 4, and the selector 7. The ROM 33 is connected to the micro-controller 31. The clock signal generator 35 is connected to the memories 11, 12, 13, and 4.

The ROM 33 stores first timing information representative of desired timings of writing and reading data pieces into and from the areas "A" and "B" of the memories 11, 12, and 13. In addition, the ROM 33 stores second timing information representative of a desired timing of reading the P-picture data piece from the memory 4. Furthermore, the ROM 33 stores third timing information representative of desired timings of data selection by the selector 7. The ROM 33 outputs the first timing information, the second timing information, and the third timing information to the micro-controller 31.

The micro-controller 31 is programmed to control the memories 11, 12, 13, and 4, and the selector 7 in response to the first timing information, the second timing information, and the third timing information. Specifically, the micro-controller 31 controls actual timings of writing and reading data pieces into and from the areas "A" and "B" of the memories 11, 12, and 13 in accordance with the desired timings represented by the first timing information. The micro-controller 31 controls an actual timing of reading the P-picture data piece from the memory 4 in accordance with the desired timing represented by the second timing information. The micro-controller 31 controls actual timings of data selection by the selector 7 in accordance with the desired timings represented by the third timing information.

The clock signal generator 35 produces a clock pulse signal having a predetermined frequency. The clock signal generator 35 outputs the clock pulse signal to the memories 11, 12, 13, and 4. The clock pulse signal provides time units in the timing control related to the memories 11, 12, 13, and 4.

### Third Embodiment

A third embodiment of this invention is similar to the first embodiment or the second embodiment thereof except for design changes mentioned later.

In the third embodiment of this invention, a trick-playback data generator or a special-playback data generator 6 (see Fig. 2 or 4) produces N-fold-speed playback data from normal-playback data, where "N" denotes a predetermined integer. N•M-fold-speed playback data are generated from the N-fold-speed playback data by a memory-based data thinning process or a memory-based data decimating process along a time base. Here, "M" denotes a predetermined integer, and "N•M" means the product of the integer M and the integer N. The normal-playback data, the N-fold-speed playback data, and the N•M-fold-speed playback data are multiplexed on a time sharing basis before being recorded on separate areas of a magnetic tape 10 (see Fig. 2 or 4) respectively.

## Claims

1. An apparatus for recording a digital information signal, comprising:
first means for processing first data for playback at a normal speed into second data for playback at a speed equal to N times the normal speed, where N denotes a predetermined integer;
second means for selecting a portion of the second data to form third data for playback at a speed equal to M•N times the normal speed, where M denotes a predetermined integer; and
third means for recording the first data, the second data, and the third data on separate areas of a recording medium respectively.

2. An apparatus as recited in claim 1, wherein the second means comprises means for decimating the second data into the third data.

3. An apparatus as recited in claim 1, wherein the second means comprises a memory which stores the second data and outputs the portion of the second data as the third data.

4. A method of recording a digital information signal, comprising the steps of:
processing first data for playback at a normal speed into second data for playback at a speed equal to N times the normal speed, where N denotes a predetermined integer;
selecting a portion of the second data to form third data for playback at a speed equal to M•N times the normal speed, where M denotes a predetermined integer; and
recording the first data, the second data, and the third data on separate areas of a recording medium respectively.

5. A method as recited in claim 4, wherein the selecting step comprises decimating the second data into the third data.

6. A method as recited in claim 4, wherein the selecting step comprises storing the second data, and outputting the portion of the second data as the third data.
